# EUROPÄISCHE PATENTANMELDUNG

(11) **EP 3 674 671 A1**
(43) Veröffentlichungstag der Anmeldung: **01.07.2020**
(21) Anmeldenummer: 19218623.7
(22) Anmeldetag: 20.12.2019
(51) Int. Cl.: G01F 1/00, G01F 15/12, G01F 15/14

(54) **BAUEINHEIT FÜR EINE FLUID-LEITUNG**

(30) Priorität: 28.12.2018 DE 102018010006
(71) Anmelder: Marquardt GmbH, 78604 Rietheim-Weilheim (DE)
(72) Erfinder: Meßner, Udo, 78604 Rietheim-Weilheim (DE); Zimmer, Andreas, 78655 Dunningen (DE); Kizele, Rainer, 78532 Tuttlingen (DE); Fahrländer, Klaus, 78554 Aldingen (DE)
(74) Vertreter: Otten, Roth, Dobler & Partner mbB Patentanwälte

(57) **Zusammenfassung**

Die Erfindung betrifft eine Baueinheit (1) zur Anordnung in einer Leitung für ein Fluid (2), umfassend einen Filter (3) und/oder einen Durchflussmengen-Begrenzer (4) und/oder einen Durchflussmesser (5) für das Fluid (2). Die Baueinheit (1) besitzt ein Gehäuse (6), wobei das Gehäuse (6) einen Einlass (7) sowie einen Auslass (8) für das Fluid (2) aufweist. Das Gehäuse (6) umfasst ein Außengehäuse (9) sowie ein Innengehäuse (10). Der Filter (3) und/oder der Durchflussmengen-Begrenzer (4) und/oder der Durchflussmesser (5) sind im Innengehäuse (10) angeordnet. Das Innengehäuse (10) weist einen Eintrittsbereich (11) sowie einen Austrittsbereich (12) für das Fluid (2) auf. Das Fluid (2) ist vom Einlass (7) zum Eintrittsbereich (11) in einem Zwischenbereich (13) zwischen dem Innen- und dem Außengehäuse (10, 9) geführt.

## Beschreibung

Die Erfindung geht aus von einer Baueinheit zur Anordnung in einer Leitung für ein Fluid nach dem Oberbegriff des Patentanspruchs 1.

Solche Baueinheiten werden für Geräte der Heizungstechnik, wie beispielsweise bei Kombithermen, eingesetzt.

Eine derartige Baueinheit umfasst einen Filter und/oder einen Durchflussmengen-Begrenzer und/oder einen Durchflussmesser für das Fluid. Die Baueinheit weist ein Gehäuse auf. Das Gehäuse weist wiederum einen Einlass sowie einen Auslass für das Fluid auf. Es hat sich gezeigt, dass die Funktionalität dieser Baueinheiten eingeschränkt ist.

Der Erfindung liegt die Aufgabe zugrunde, die Baueinheit derart weiterzuentwickeln, dass deren Funktionalität gesteigert ist.

Diese Aufgabe wird bei einer gattungsgemäßen Baueinheit durch die kennzeichnenden Merkmale des Anspruchs 1 gelöst.

Bei der erfindungsgemäßen Baueinheit zur Anordnung in einer Leitung für ein Fluid umfasst das Gehäuse ein Außengehäuse sowie ein wenigstens teilweise im Außengehäuse befindliches Innengehäuse. Der Filter und/oder der Durchflussmengen-Begrenzer und/oder der Durchflussmesser sind im und/oder am Innengehäuse angeordnet. Insbesondere können der Filter und der Durchflussmengen-Begrenzer und der Durchflussmesser aufeinanderfolgend im und/oder am Innengehäuse angeordnet sein. In vorteilhafter Weise ist eine hohe Funktionalität für die Baueinheit erzielt, wobei die Baueinheit dennoch sehr kompakt ausgestaltet ist. Weitere Ausgestaltungen der Erfindung sind Gegenstand der Unteransprüche.

In weiterer Ausgestaltung kann das Innengehäuse einen Eintrittsbereich sowie einen Austrittsbereich für das Fluid aufweisen. Zweckmäßigerweise kann das Fluid vom Einlass zum Eintrittsbereich in einem Zwischenbereich zwischen dem Innen- und dem Außengehäuse geführt sein. In kompakter Art und Weise kann der Austrittsbereich für das Fluid mit dem Auslass in Verbindung stehen. Des Weiteren kann das Fluid im Zwischenbereich in Gegenrichtung zur Flussrichtung im Innengehäuse fließen. Zwecks Erweiterung der Funktionalität kann das Innengehäuse in der Art einer Kartusche ausgebildet sein. Das Innengehäuse kann wiederum an einer Seite des Außengehäuses, insbesondere zu Servicezwecken und/oder zwecks Austausch, in einfacher Art und Weise entnehmbar ausgebildet sein.

In zweckmäßiger Ausgestaltung können das Außengehäuse und/oder das Innengehäuse zylindrisch ausgebildet sein. Der Auslass kann an der einen Deckelfläche des, insbesondere als Zylinder ausgebildeten, Außengehäuses befindlich sein. Das Innengehäuse kann an der anderen, gegenüberliegenden Deckelfläche entnehmbar sein. Des Weiteren kann die andere Deckelfläche für die Entnahme des Innengehäuses abnehmbar ausgebildet sein. Zweckmäßigerweise kann die andere Deckelfläche abgedichtet am Außengehäuse angeordnet sein, um Leckagen des Fluids an der Baueinheit zu verhindern.

Schließlich kann der Einlass an der Mantelfläche des, insbesondere als Zylinder ausgebildeten, Außengehäuses angeordnet sein. Weiterhin kann der Einlass an der dem Auslass zugewandten Seite angeordnet sein. Der Eintrittsbereich kann wiederum an der dem Auslass abgewandten Seite an der Mantelfläche des, insbesondere als Zylinder ausgebildeten, Innengehäuses angeordnet sein.

Für eine besonders bevorzugte Ausgestaltung der Erfindung ist nachfolgendes festzustellen.

Eine Hydraulik-Baugruppe für den Heizungsbereich besteht aus einem Gehäuse, welches eine wechselbare Kartusche mit Filter, Flow Limiter und Flow Sensor enthält. Die entsprechenden Funktionalitäten der Einheit sind das Wasser zu filtern, die durchströmende Wassermenge zu limitieren und diese zu messen. Zudem soll die gesamte Einheit einen geringen Druckabfall aufweisen. Die Position der Ein- und Auslassadaption ist vorgegeben und soll beibehalten werden. Weiter von Vorteil ist, dass die Einheit von ihrer Frontseite bedient und gewartet werden kann.

Die Wasserführung innerhalb der Einheit ist konstruktiv so gestaltet, dass die genannten Anforderungen erfüllt werden und eine optimale Funktionalität aller Einzelkomponenten und somit der gesamten Einheit gewährleistet ist. Das Brauchwasser tritt durch die Inlet-Adaption in die Einheit ein und fließt zwischen der Außenseite der Cartridge bzw. Kartusche an der Mantelfläche und der Innenseite des Gehäuses bzw. Housing zum Filter. Durch den Filter kann das Wasser in den Durchflussbegrenzer fließen. An dessen Ende tritt das Wasser mit dem vom Durchflussbegrenzer bzw. Flow Limiter definierten Durchfluss aus, durchströmt den nachgelagerten Durchflusssensor bzw. Flow Sensor und fließt durch das Outlet der Einheit wieder nach außen. Die Kartusche kann zur Frontseite hin, z.B. für Servicezwecke, entnommen werden.

In vorteilhafter Weise ist somit die Vereinigung von Teilkomponenten innerhalb einer Sensoreinheit unter Wahrung der Funktionalität bei gleichzeitig geringem Druckabfall erzielt.

Die mit der Erfindung erzielten Vorteile bestehen insbesondere in Folgendem:
- Teilkomponenten und/oder Teilfunktionen können in einer Einheit vereint werden.
- Es kann die bestehende Adaption zu Flow-Inlet und -Outlet verwendet werden.
- Es ist ein geringer Druckabfall der Hydraulik-Baugruppe bei gleichzeitig voller Funktionalität innerhalb des geringen Bauraums gegeben.
- Es ist eine einfache bzw. leichte Wartung durch eine leicht entfernbare und/oder austauschbare Cartridge bzw. Kartuschen-Einheit mit einem darin enthaltenen Flow Sensor und/oder Flow Limiter und/oder Flow-Filter gegeben.

Ein Ausführungsbeispiel der Erfindung mit verschiedenen Weiterbildungen und Ausgestaltungen ist in den Zeichnungen dargestellt und wird im folgenden näher beschrieben. Es zeigen
- Fig. 1: eine Baueinheit zur Anordnung in einer Leitung für ein Fluid in schematischer Ansicht und
- Fig. 2: einen Schnitt entlang der Linie 2-2 in Fig. 1.

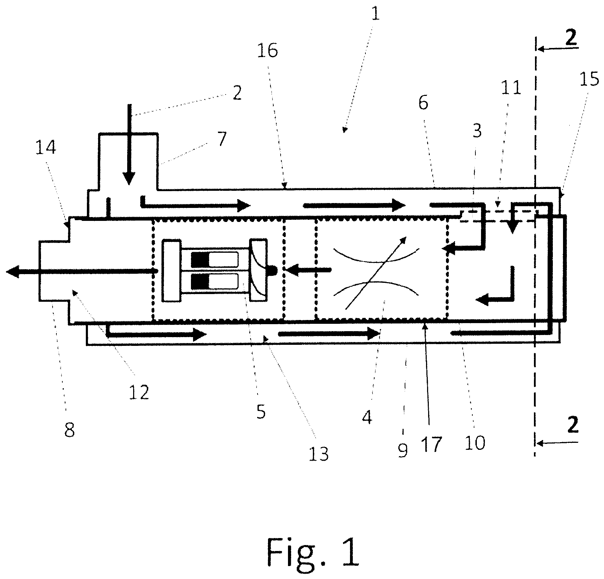

In Fig. 1 ist eine Baueinheit 1 zur Anordnung in einer Leitung für ein Fluid 2 gezeigt, welche einen Filter 3 und/oder einen Durchflussmengen-Begrenzer 4 und/oder einen Durchflussmesser 5 für das Fluid 2 umfasst. Die Baueinheit 1 besitzt ein Gehäuse 6, wobei das Gehäuse 6 einen Einlass 7 sowie ein Auslass 8 für das Fluid 2 aufweist. Das Gehäuse 6 umfasst wiederum ein Außengehäuse 9 sowie ein wenigstens teilweise im Außengehäuse 9 befindliches Innengehäuse 10. Dabei sind der Filter 3 und/oder der Durchflussmengen-Begrenzer 4 und/oder der Durchflussmesser 5 im und/oder am Innengehäuse 10 angeordnet. Und zwar sind der Filter 3 und der Durchflussmengen-Begrenzer 4 und der Durchflussmesser 5 aufeinanderfolgend im und/oder am Innengehäuse 10 angeordnet.

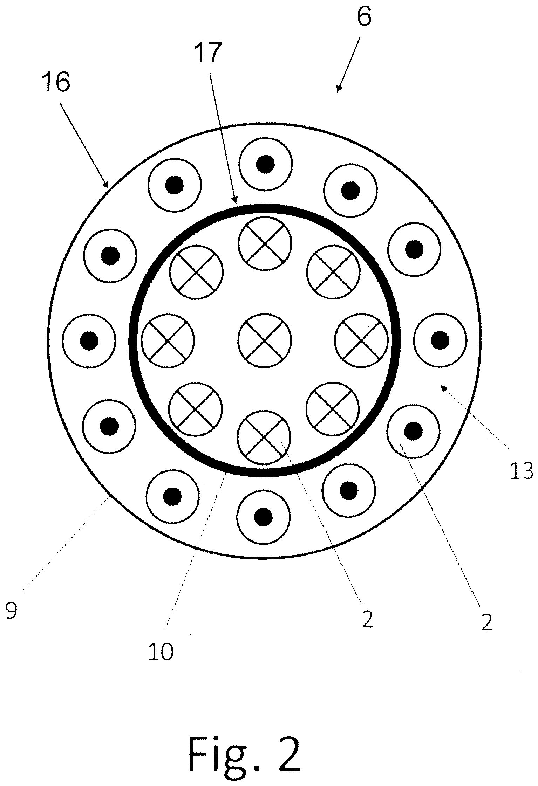

Das Innengehäuse 10 weist einen Eintrittsbereich 11 sowie einen Austrittsbereich 12 für das Fluid 2 auf. Das Fluid 2 ist vom Einlass 7 zum Eintrittsbereich 11 in einem Zwischenbereich 13 zwischen dem Innengehäuse 10 und dem Außengehäuse 9 geführt. Der Austrittsbereich 12 für das Fluid 2 steht mit dem Auslass 8 in Verbindung. Das Fluid 2 fließt im Zwischenbereich 13 in Gegenrichtung zur Flussrichtung im Innengehäuse 10. Die Flussrichtung für das Fluid 2 ist näher in Fig. 2 zu sehen, wobei die zum Betrachter hinführende Fließrichtung mit einem Punkt und die vom Betrachter wegführende Fließrichtung mit einem Kreuz gekennzeichnet ist.

Das Innengehäuse 10 ist in der Art einer Kartusche ausgebildet, die die funktionellen Komponenten, nämlich den Filter 3, den Durchflussmengen-Begrenzer 4 sowie den Durchflussmesser 5, enthält. Des Weiteren ist das Innengehäuse 10 an einer Seite des Außengehäuses 9, und zwar an der Frontseite, entnehmbar ausgebildet. Insbesondere kann das Innengehäuse 10 somit in einfacher Weise zu Servicezwecken und/oder zwecks Austausch aus dem Außengehäuse 9 entnommen werden.

Wie weiter der Fig. 2 zu entnehmen ist, sind das Außengehäuse 9 und/oder das Innengehäuse 10 zylindrisch ausgebildet. Der Auslass 8 ist an der einen Deckelfläche 14 des insbesondere als Zylinder ausgebildeten Außengehäuses 9 befindlich, wie anhand der Fig. 1 zu sehen ist. Das Innengehäuse 10 ist an der anderen, gegenüberliegenden Deckelfläche 15 des Außengehäuses 9 entnehmbar. Für die Entnahme des Innengehäuses 10 ist die andere Deckelfläche 15 abnehmbar ausgebildet. Des Weiteren ist die andere Deckelfläche 15 abgedichtet am Außengehäuse 9 angeordnet.

Wie ebenfalls der Fig. 1 zu entnehmen ist, ist der Einlass 7 wiederum an der Mantelfläche 16 des insbesondere als Zylinder ausgebildeten Außengehäuses 9, und zwar an der dem Auslass 8 zugewandten Seite, angeordnet. Der Eintrittsbereich 11 ist an der dem Auslass 8 abgewandten Seite an der Mantelfläche 17 des insbesondere als Zylinder ausgebildeten Innengehäuses 10 angeordnet. Der Filter 3 befindet sich bevorzugterweise direkt am Eintrittsbereich 11, indem der Filter 3 an der Mantelfläche 17 am Innengehäuse 10 angeordnet ist.

Die Erfindung ist nicht auf das beschriebene und dargestellte Ausführungsbeispiel beschränkt. Sie umfasst vielmehr auch alle fachmännischen Weiterbildungen im Rahmen der durch die Patentansprüche definierten Erfindung. So kann die erfindungsgemäße Baueinheit nicht nur bei Geräten in der Heizungstechnik sondern auch bei Hausgeräten, wie Waschmaschinen, Geschirrspülmaschinen o. dgl., oder sonstigen Geräten der Weißen Ware Verwendung finden.

### Bezugszeichen-Liste:

- 1:: Baueinheit
- 2:: Fluid
- 3:: Filter
- 4:: Durchflussmengen-Begrenzer
- 5:: Durchflussmesser
- 6:: Gehäuse
- 7:: Einlass
- 8:: Auslass
- 9:: Außengehäuse
- 10:: Innengehäuse
- 11:: Eintrittsbereich
- 12:: Austrittsbereich
- 13:: Zwischenbereich
- 14,15:: Deckelfläche
- 16:: Mantelfläche (von Außengehäuse)
- 17:: Mantelfläche (von Innengehäuse)

## Patentansprüche

1. Baueinheit zur Anordnung in einer Leitung für ein Fluid (2), umfassend einen Filter (3) und/oder einen Durchflussmengen-Begrenzer (4) und/oder einen Durchflussmesser (5) für das Fluid (2), und mit einem Gehäuse (6), wobei das Gehäuse (6) einen Einlass (7) sowie einen Auslass (8) für das Fluid (2) aufweist, **dadurch gekennzeichnet, dass** das Gehäuse (6) ein Außengehäuse (9) sowie ein wenigstens teilweise im Außengehäuse (9) befindliches Innengehäuse (10) umfasst, und dass der Filter (3) und/oder der Durchflussmengen-Begrenzer (4) und/oder der Durchflussmesser (5) im und/oder am Innengehäuse (10) angeordnet sind, insbesondere dass der Filter (3) und der Durchflussmengen-Begrenzer (4) und der Durchflussmesser (5) aufeinanderfolgend im und/oder am Innengehäuse (10) angeordnet sind.

2. Baueinheit nach Anspruch 1, **dadurch gekennzeichnet, dass** das Innengehäuse (10) einen Eintrittsbereich (11) sowie einen Austrittsbereich (12) für das Fluid (2) aufweist, und dass vorzugsweise das Fluid (2) vom Einlass (7) zum Eintrittsbereich (11) in einem Zwischenbereich (13) zwischen dem Innen- und dem Außengehäuse (10, 9) geführt ist.

3. Baueinheit nach Anspruch 1 oder 2, **dadurch gekennzeichnet, dass** der Austrittsbereich (12) für das Fluid (2) mit dem Auslass (8) in Verbindung steht.

4. Baueinheit nach Anspruch 1, 2 oder 3, **dadurch gekennzeichnet, dass** das Fluid (2) im Zwischenbereich (13) in Gegenrichtung zur Flussrichtung im Innengehäuse (10) fließt.

5. Baueinheit nach einem der Ansprüche 1 bis 4, **dadurch gekennzeichnet, dass** das Innengehäuse (10) in der Art einer Kartusche ausgebildet ist, und dass vorzugsweise das Innengehäuse (10) an einer Seite des Außengehäuses (9), insbesondere zu Zwecken für den Service und/oder für den Austausch, entnehmbar ausgebildet ist.

6. Baueinheit nach einem der Ansprüche 1 bis 5, **dadurch gekennzeichnet, dass** das Außengehäuse (9) und/oder das Innengehäuse (10) zylindrisch ausgebildet sind, dass vorzugsweise der Auslass (8) an der einen Deckelfläche (14) des, insbesondere als Zylinder ausgebildeten, Außengehäuses (9) befindlich ist, und dass weiter vorzugsweise das Innengehäuse (10) an der anderen, gegenüberliegenden Deckelfläche (15) entnehmbar ist.

7. Baueinheit nach einem der Ansprüche 1 bis 6, **dadurch gekennzeichnet, dass** die andere Deckelfläche (15) für die Entnahme des Innengehäuses (10) abnehmbar ausgebildet ist, und dass die andere Deckelfläche (15) abgedichtet am Außengehäuse (9) angeordnet ist.

8. Baueinheit nach einem der Ansprüche 1 bis 7, **dadurch gekennzeichnet, dass** der Einlass (7) an der Mantelfläche (16) des, insbesondere als Zylinder ausgebildeten, Außengehäuses (9) angeordnet ist, und dass vorzugsweise der Einlass (7) an der dem Auslass (8) zugewandten Seite angeordnet ist.

9. Baueinheit nach einem der Ansprüche 1 bis 8, **dadurch gekennzeichnet, dass** der Eintrittsbereich (11) an der dem Auslass (8) abgewandten Seite an der Mantelfläche (17) des, insbesondere als Zylinder ausgebildeten, Innengehäuses (10) angeordnet ist.
